# EUROPEAN PATENT SPECIFICATION

(11) **EP 3 422 508 B1**
(45) Date of publication and mention of the grant of the patent: **14.07.2021**
(21) Application number: 18180229.9
(22) Date of filing: 27.06.2018
(51) Int. Cl.: H02G 3/04

(54) **METHOD OF MANUFACTURING A MESH CABLE TRAY**
VERFAHREN ZUR HERSTELLUNG EINER NETZKABELRINNE
PROCÉDÉ DE FABRICATION D'UN CHEMIN DE CÂBLES EN RÉSEAU

(30) Priority: 29.06.2017 ES 201730864
(43) Date of publication of application: 02.01.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A1- 1 102 376
- WO-A1-2015/144228
- JP-A- 2011 172 429
- US-B1- 6 959 898

## Description

### Field of the Invention

The invention relates to a method of manufacturing a mesh cable tray.

The mesh cable trays referred to in the invention have a U-shaped cross-section, with a bottom wall and two side walls, and are made up of a plurality of transverse rods and a plurality of longitudinal rods, said transverse rods and longitudinal rods intersecting with one another forming a mesh and being joined to one another.

### State of the Art

Mesh cable trays are particularly suitable for carrying electric cables that must be well ventilated as a result of air being able to pass freely through the bottom and side walls of the mesh cable tray. They are also suitable for carrying all types of cables (power cords or data cables, optical fiber cables, etc.) in installations in which it is desired for the cables to be visible and readily accessible. Another advantage of mesh cable trays is that they have a good mechanical strength without having an excessive weight.

In the known mesh cable trays, the transverse rods and the longitudinal rods forming a mesh are metal rods with a circular cross-section which intersect with one another on overlapping planes and are welded together at the intersecting points as shown, for example, in documents ES2279589T3 and ES2289249T3. A problem of these mesh cable trays is that the intersections between the rods form hard-to-clean nooks and crevices in which dirt accumulates. One of the implications of this problem is that the known mesh cable trays are rather unsuitable for installations with strict hygiene requirements, such as in the food industry, for example. Another drawback of these mesh cable trays is that cables having a small diameter may get caught in the intersections between the rods.

Document WO2015144228A1 discloses a method of manufacturing a mesh cable tray from a flat metal sheet, the method comprising first steps of punching and forming operations, in which through holes are produced in the flat metal sheet so that the remaining material constitutes transverse rods and longitudinal rods of the mesh cable tray being formed, and a final step of bending the flat metal sheet along two bending lines parallel to the longitudinal direction so that the U-shape of the mesh cable tray is formed.

### Description of the Invention

The purpose of the invention is to provide a mesh cable tray of the type indicated above, offering the aforementioned advantages characteristic of a mesh configuration, as well as improved hygiene conditions, and allowing an easier placement of the cables that must run along the cable tray.

This purpose is achieved by means of a method for manufacturing a mesh cable tray of the type indicated above, characterized in that it comprises the following steps:
- forming, by means of extrusion, a continuous channel made of a polymeric material with a U-shaped cross-section;
- perforating said continuous channel forming openings in said channel, such that the remaining portions of said continuous channel demarcating said openings constitute the transverse rods and the longitudinal rods of the mesh cable tray.

This method according to the invention provides a mesh cable tray formed as a single part made of a polymeric material, in which the bottom wall and the side walls made up of the transverse rods are each of them a discontinuous wall on a single plane. As a result thereof, the cables are supported on each wall of the cable tray on one and the same plane, so it is easier to move the cables over said wall without the risk of said cables getting caught on the transverse rods and the longitudinal rods. On the other hand, as the rods do not intersect with one another on overlapping planes, less dirt will accumulate in the intersections and these intersections will furthermore be easier to clean. Advantageously, the continuous extruded channel can be the same continuous channel used as a cable tray for other applications, so it is not required to provide a specific extrusion installation, and it is furthermore possible to share some accessories, such as the lidding elements that are fixed on the continuous channel by pressure, for example, since the external shape of the mesh cable tray can be the same as the external shape of the continuous channel.

Preferred embodiments the features of which are described in the dependent claims have been provided based on the invention defined in the main claim.

After the perforation of the continuous channel to form the openings, a finishing forming operation is preferably performed to remove the sharp edge from the corners of the remaining portions making up the transverse rods and the longitudinal rods, for the purpose lowering the risk of the cables getting damaged as they brush against said transverse rods and longitudinal rods. The removal of the sharp edge is preferably performed by rounding the corners. It can also be performed by beveling the corners.

Said finishing forming operation is preferably performed such that said transverse rods and longitudinal rods have a rectangular-shaped, preferably a square-shaped, cross-section, with four planar faces and corners without any sharp edge after said operation. These planar faces of the rods form a stable sitting surface for cables and accessories. In particular, at the bottom of the mesh cable tray, all these planar faces of the rods form a discontinuous planar surface making it easier to support the cables on said bottom, and also to place the various accessories on said bottom, such as accessories for holding the cables, for example.

The continuous channel formed by extrusion preferably has at the free ends of its side walls an outward flange, and the perforation of the continuous channel to form the openings is performed such that said flange which thereby forms one of said longitudinal rods is left in said mesh cable tray. This configuration of the mesh cable tray makes it easier to place a lid which can be snap-fitted onto the flange.

The polymeric material constituting the continuous extruded channel, and therefore the mesh cable tray resulting from the method according to the invention, is preferably a thermoplastic such as PVC, polycarbonate, or polypropylene. It can also be a thermosetting resin such as glass-fiber reinforced polyester. The polymeric material is preferably an electrical insulating material, so the mesh cable tray itself provides a reliable electrical protection, making it unnecessary to ground the cable installation. The polymeric material is preferably an electrical insulating material with a surface resistivity greater than 100 MΩ (surface resistivity measured according to the EN 62631-3-2:2016 standard).

A mesh cable tray which can be obtained by means of the described method is described.

The mesh cable tray has a U-shaped cross-section, with a bottom wall and two side walls, and is made up of a plurality of transverse rods and a plurality of longitudinal rods, said transverse rods and longitudinal rods intersecting with one another forming a mesh and being joined to one another, characterized in that it is made as a single part made of a polymeric material having openings made such that said transverse rods and longitudinal rods are made up of portions demarcating said openings, and in that said transverse rods and longitudinal rods are coplanar in the intersections thereof with one another.

The corners of said portions demarcating said openings and making up the transverse rods and the longitudinal rods are preferably without any sharp edge. The corners are preferably rounded. Another possibility is that the corners are beveled.

Said transverse rods and longitudinal rods preferably have a rectangular-shaped, preferably a square-shaped, cross-section, with four planar faces and corners without any sharp edge.

The mesh cable tray preferably has at the free ends of its side walls an outward flange formed by one of said longitudinal rods.

The polymeric material constituting the mesh cable tray according to the invention is preferably a thermoplastic such as PVC, polycarbonate, or polypropylene. It can also be a thermosetting resin such as glass-fiber reinforced polyester. The polymeric material is preferably an electrical insulating material, so the mesh cable tray itself provides a reliable electrical protection, making it unnecessary to ground the cable installation. The polymeric material is preferably an electrical insulating material with a surface resistivity greater than 100 MΩ (surface resistivity measured according to the EN 62631-3-2:2016 standard).

The invention also comprises other detail-related features shown in the following detailed description of an embodiment of the invention and in the attached drawings.

### Brief Description of the Drawings

The advantages and features of the invention will be understood from the following description in which preferred embodiments of the invention are described in reference to the drawings without limiting the scope of the main claim.
Figure 1 is a top perspective view of a continuous channel made of a polymeric material formed by extrusion in a first step of the method of manufacturing according to the invention.
Figure 2 is a top perspective view of the mesh cable tray obtained in a second step of the method by perforating the continuous channel shown in Figure 1.
Figures 3 and 4 are, respectively, a top perspective view and a detail view of the mesh cable tray obtained in a third step of the method, in which a finishing forming operation is performed. Figure 4 is an enlarged detail view of the area indicated by a dashed circle in Figure 3.
Figures 5 and 6 are similar to Figures 3 and 4, but from a bottom perspective view.
Figures 7A and 7B are enlarged sectional views of any one of the longitudinal or transverse rods of the mesh cable tray, respectively, before and after the third step in which a finishing forming operation is performed.
Figure 8 is a front view of the mesh cable tray.
Figure 9 is a front view of the same mesh cable tray with a lid.

### Detailed Description of Embodiments of the Invention

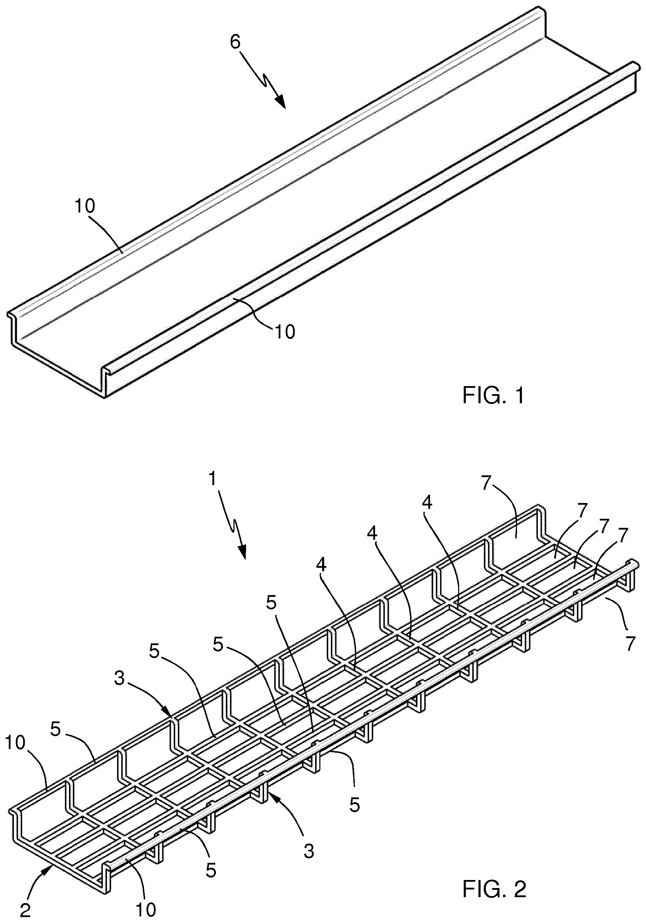

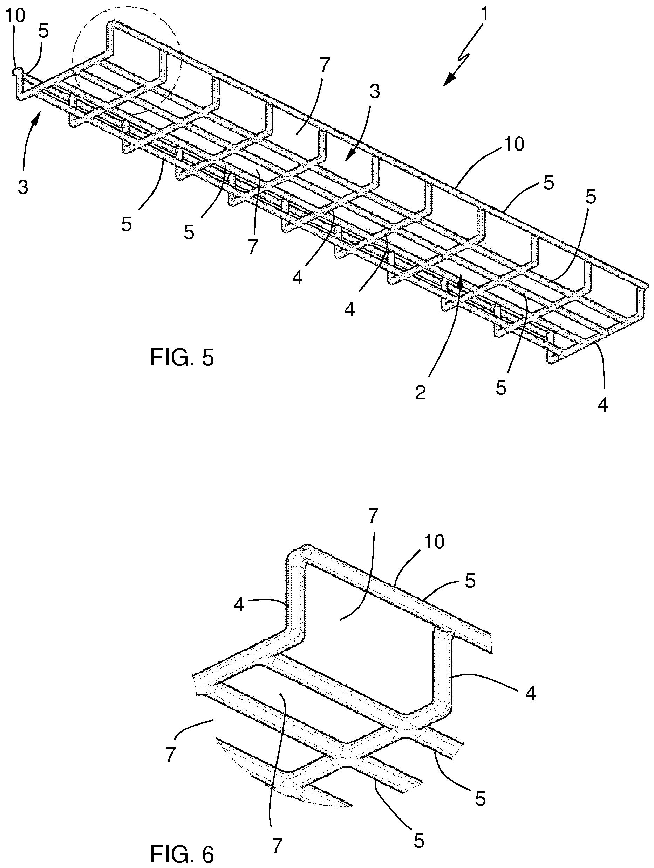

Figures 1 to 7 show different phases of the mesh cable tray throughout the different steps of the method of manufacturing same.

In a first step of the method of manufacturing, a continuous channel 6 made of a polymeric material with a U-shaped cross-section, as shown in Figure 1, is formed by extrusion. In the depicted embodiment, the continuous channel 6 formed by extrusion has at the free ends of its side walls an outward flange 10.

The polymeric material used for forming, by means of extrusion, this continuous channel 6 is preferably an electrical insulating material with a surface resistivity greater than 100 MΩ (measured according to the EN 62631-3-2:2016 standard). For example, the polymeric material is polyvinyl chloride (PVC).

In a second step of the method of manufacturing, the continuous channel 6 is perforated to form openings 7 in this channel, such that the remaining portions of said continuous channel 6 demarcating these openings 7 constitute transverse rods 4 and longitudinal rods 5 that intersect with one another forming a mesh. Figure 2 shows the mesh cable tray 1 obtained after this perforation operation. As can be seen in the drawing, the mesh cable tray 1 thus obtained has the same general structure as conventional mesh cable trays, i.e., having a U-shaped cross-section, with a bottom wall 2 and two side walls 3, and is made up of a plurality of transverse rods 4 and a plurality of longitudinal rods 5 which are joined to one another forming a mesh. However, unlike the known mesh cable trays, in the mesh cable tray 1 according to the invention the transverse rods 4 and the longitudinal rods 5 are not independent rods that intersect with one another on overlapping planes and welded together at the intersecting points, but rather form a single part and are coplanar in the intersections thereof with one another.

The process of perforating the continuous channel 6 to form the openings 7 is performed such that there is left in the mesh cable tray 1 the flange 10 which was already present in said continuous channel 6. This flange 10 thereby forms one of the longitudinal rods 5.

In the preferred embodiments, this second step of the method of manufacture is carried out using a stamping device to make cuts corresponding to the openings 7 on the continuous channel 6. The stamping device is preferably applied on the continuous channel 6 when the polymeric material constituting same has yet to harden completely following the extrusion in the first step. It is also possible to make cuts with a stamping device when the polymeric material constituting the continuous channel 6 has already harden. Another possible solution for making these openings 7 in the continuous channel 6 is to use a numerical control precision milling machine.

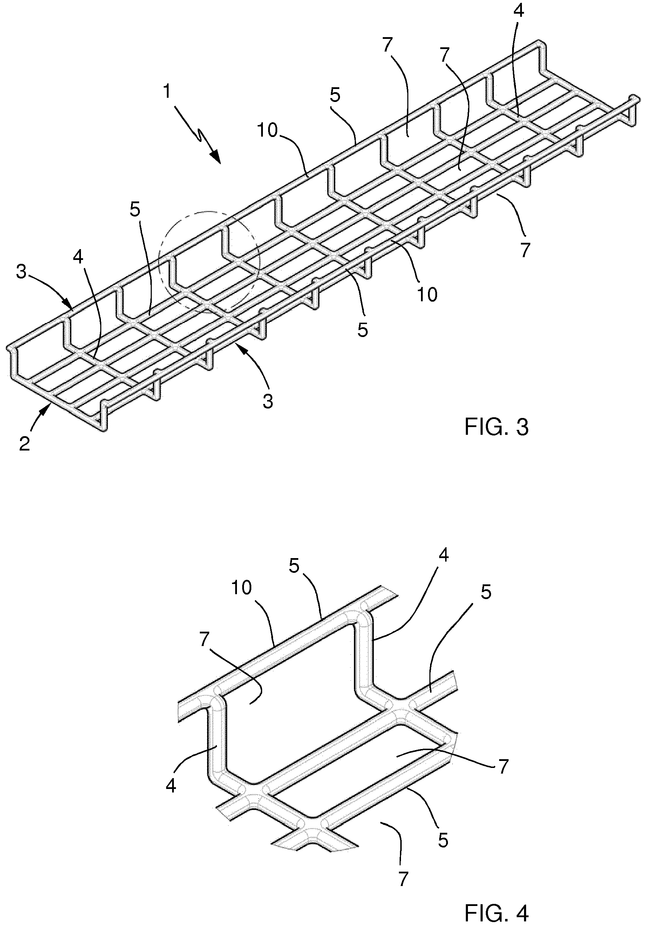

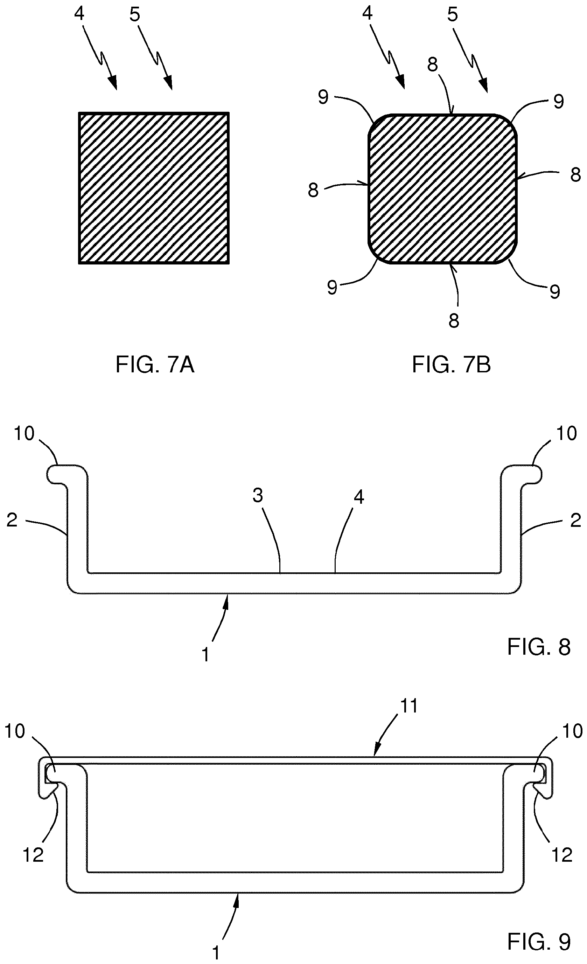

The method of manufacturing preferably comprises a third step in which the mesh cable tray 1 obtained in the second step is subjected to a finishing forming operation to remove the sharp edge from the corners of the remaining portions making up the transverse rods 4 and the longitudinal rods 5. Advantageously, the removal of the sharp edge is performed by rounding the corners. The mesh cable tray 1 shown in Figures 3 to 6, in which the transverse rods 4 and the longitudinal rods 5 have a cross-section shape similar to that of the rods forming the known mesh cable trays, is thus obtained. Advantageously, the finishing forming operation is performed only at the corners of the transverse rods 4 and the longitudinal rods 5, such that after said operation, said transverse rods 4 and longitudinal rods 5 have a rectangular-shaped cross-section with four planar faces 8 and corners without any sharp edge, which are preferably rounded corners 9. The perforation of the openings 7 in the second step is preferably performed such that the transverse rods 4 and the longitudinal rods 5 are created with a square-shaped cross-section, as shown in Figure 7A, so said transverse rods 4 and longitudinal rods 5 will have after the third step a square-shaped cross-section with four identical planar faces 8 and corners without any sharp edge, which are preferably rounded corners 9, as shown in Figure 7B.

In the preferred embodiments, the finishing forming operation is performed using a die which is inserted in the openings 7 and exerts a pressure on the corners of the transverse rods 4 and the longitudinal rods 5 that is sufficient to cause permanent deformation of the said corners. Advantageously, this die is applied on the transverse rods 4 and the longitudinal rods 5 when the polymeric material constituting said rods has yet to harden completely following the extrusion of the continuous channel 6 in the first step. It is also possible to perform the finishing forming operation with a heated die when the polymeric material constituting the transverse rods 4 and the longitudinal rods 5 has already harden. Another possible solution for performing the finishing forming operation is to use a numerical control precision milling machine.

The polymeric material constituting the mesh cable tray 1 thus manufactured is the same as the material constituting the continuous channel 6 given that the mesh cable tray was obtained by means of a forming operation applied to the continuous channel.

As can be seen in the front view of Figure 8, in the cable tray 1 each of the side walls 2 and the bottom wall 3 is on one and the same plane, because the transverse rods 4 and the longitudinal rods 5 intersect with one another on one and the same plane without overlapping. This is a significant difference with respect to the known mesh cable trays, in which the transverse rods and the longitudinal rods forming a mesh are metal rods which intersect with one another on overlapping planes and are welded together at the intersecting points.

The front view of Figure 9 shows a lid 11 snap-fitted onto the mesh cable tray 1. The lid 11 has on its lateral ends a tooth 12 that engages the flange 10 of the mesh cable tray 1. This engagement of the tooth 12 with the flange 10 allows fixing the lid 11 on the mesh cable tray 1 by pressure, in the same way a lid is fixed to a continuous extruded cable tray. Advantageously, the lid 11 is the same as that used for a continuous extruded cable tray having the same front profile as the mesh cable tray 1. The flange 10 can have the shape shown in Figure 8 or another shape which corresponds to another continuous extruded cable tray and is therefore compatible with the lid used for said tray.

## Claims

1. Method of manufacturing a mesh cable tray (1) having a U-shaped cross-section, with a bottom wall (2) and two side walls (3), and which is made up of a plurality of transverse rods (4) and a plurality of longitudinal rods (5), said transverse rods (4) and the longitudinal rods (5) intersecting with one another forming a mesh and being joined to one another, **characterized in that** it comprises the following steps:
- forming, by means of extrusion, a continuous channel (6) made of a polymeric material with a U-shaped cross-section;
- perforating said continuous channel (6) forming openings (7) in said channel, such that the remaining portions of said continuous channel (6) demarcating said openings (7) constitute the transverse rods (4) and the longitudinal rods (5).

2. The method of manufacturing a mesh cable tray (1) according to claim 1, **characterized in that** after said perforation of the continuous channel (6) to form the openings (7), a finishing forming operation is performed to remove the sharp edge from the corners of said remaining portions making up the transverse rods (4) and the longitudinal rods (5).

3. The method of manufacturing a mesh cable tray (1) according to claim 2, **characterized in that** said finishing forming operation is made such that the transverse rods (4) and the longitudinal rods (5) have a rectangular-shaped cross-section with four planar faces (8) and corners without any sharp edge (9) after said operation.

4. The method of manufacturing a mesh cable tray (1) according to any of claims 1 to 3, **characterized in that** said continuous channel (6) formed by extrusion has at the free ends of its side walls an outward flange (10), and **in that** said perforation of the continuous channel (6) to form the openings (7) is performed such that there is left in said mesh cable tray (1) said flange (10) which thereby forms one of said longitudinal rods (5).

5. The method of manufacturing a mesh cable tray (1) according to any of claims 1 to 4, **characterized in that** the polymeric material constituting said continuous channel (6) formed by extrusion is a material from the group consisting of thermoplastics and thermosetting resins.

6. The method of manufacturing a mesh cable tray according to any of claims 1 to 5, **characterized in that** the polymeric material constituting said continuous channel (6) formed by extrusion is an electrical insulating material with a surface resistivity greater than 100 MΩ.

## Patentansprüche

1. Das Verfahren zum Herstellen eines Gitter-Kabelkanals (1), aufweisend einen U-förmigen Querschnitt, mit einer Bodenwand (2) und zwei Seitenwänden (3), und der aus einer Vielzahl von Querstreben (4) und einer Vielzahl von Längsstreben (5) ausgebildet ist, wobei die Querstreben (4) und die Längsstreben (5) sich miteinander kreuzen, um ein Gitter zu bilden, und miteinander verbunden werden, **dadurch gekennzeichnet, dass** es die folgenden Schritte umfasst:
- Bilden eines durchgehenden Kanals (6) aus einem Polymermaterial mit einem U-förmigen Querschnitt mittels Extrusion;
- Perforieren des durchgehenden Kanals (6), wobei Öffnungen (7) in dem Kanal ausgebildet werden, sodass die verbleibenden Abschnitte des durchgehenden Kanals (6), die die Öffnungen (7) begrenzen, die Querstreben (4) und die Längsstreben (5) bilden.

2. Das Verfahren zum Herstellen eines Gitter-Kabelkanals (1) gemäß Anspruch 1, **dadurch gekennzeichnet, dass** nach der Perforation des durchgehenden Kanals (6) zur Bildung der Öffnungen (7), ein Endbearbeitungsvorgang durchgeführt wird, um die scharfen Kanten von den Ecken des verbleibenden Abschnitts zu entfernen, welche die Querstreben (4) und die Längsstreben (5) ausmachen.

3. Das Verfahren zum Herstellen eines Gitter-Kabelkanals (1) gemäß Anspruch 2, **dadurch gekennzeichnet, dass** der Endbearbeitungsvorgang so durchgeführt wird, dass die Querstreben (4) und die Längsstreben (5) nach diesem Vorgang einen rechteckigen Querschnitt mit vier ebene Flächen (8) und Ecken ohne scharfe Kanten (9) aufweisen.

4. Das Verfahren zum Herstellen eines Gitter-Kabelkanals (1) gemäß einem der Ansprüche 1 bis 3, **dadurch gekennzeichnet, dass** der durchgehende Kanal (6), der durch Extrusion hergestellt ist, an dem freien Ende seiner Seitenwände einen nach außen gerichteten Flansch (10) aufweist, und, dass die Perforation des durchgehenden Kanals (6) zur Ausbildung der Öffnungen (7) so ausgeführt ist, dass in dem Gitter-Kabelkanal (1) der Flansch (10) verbleibt, der dadurch eine der Längsstreben (5) ausbildet.

5. Das Verfahren zum Herstellen eines Gitter-Kabelkanals (1) gemäß einem der Ansprüche 1 bis 4, **dadurch gekennzeichnet, dass** das Polymermaterial, das den durch Extrusion gebildeten durchgehenden Kanal (6) ausbildet, ein Material ist, ausgewählt aus der Gruppe, bestehend aus Thermoplasten und duroplastischen Harzen.

6. Das Verfahren zum Herstellen eines Gitter-Kabelkanals (1) gemäß einem der Ansprüche 1 bis 5, **dadurch gekennzeichnet, dass** das Polymermaterial, das den durch Extrusion gebildeten durchgehenden Kanal (6) ausbildet, ein elektrisch isolierendes Material mit einem spezifischen Oberflächenwiderstand von mehr als 100 MΩ ist.

## Revendications

1. Procédé de fabrication d'un chemin de câbles en treillis (1) ayant une section transversale en forme de U avec une paroi de fond (2) et deux parois latérales (3), et qui est composé d'une pluralité de tiges transversales (4) et d'une pluralité de tiges longitudinales (5), lesdites tiges transversales (4) et les tiges longitudinales (5) se croisant les unes avec les autres en formant un treillis et étant reliées les unes aux autres, **caractérisé en ce qu'**il comprend les étapes suivantes :
- former, au moyen d'une extrusion, un canal continu (6) réalisé en un matériau polymère avec une section transversale en forme de U ;
- perforer ledit canal continu (6) en formant des ouvertures (7) dans ledit canal, de sorte que les parties restantes dudit canal continu (6) délimitant lesdites ouvertures (7) constituent les tiges transversales (4) et les tiges longitudinales (5).

2. Procédé de fabrication d'un chemin de câbles en treillis (1) selon la revendication 1, **caractérisée en ce qu'**après ladite perforation du canal continu (6) pour former les ouvertures (7), une opération de formage de finition est réalisée pour enlever l'arête vive des coins desdites parties restantes composant les tiges transversales (4) et les tiges longitudinales (5).

3. Procédé de fabrication d'un chemin de câbles en treillis (1) selon la revendication 2, **caractérisé en ce que** ladite opération de formage de finition est effectuée de sorte que les tiges transversales (4) et les tiges longitudinales (5) aient une section transversale de forme rectangulaire avec quatre faces planes (8) et des coins sans aucune arête vive (9) après ladite opération.

4. Procédé de fabrication d'un chemin de câbles en treillis (1) selon l'une quelconque des revendications 1 à 3, **caractérisé en ce que** ledit canal continu (6) formé par extrusion présente aux extrémités libres de ses parois latérales un rebord (10) extérieur, et **en ce que** ladite perforation du canal continu (6) pour former les ouvertures (7) est réalisée de sorte à laisser dans ledit chemin de câbles en treillis (1) ledit rebord (10) qui forme ainsi l'une desdites tiges longitudinales (5).

5. Procédé de fabrication d'un chemin de câbles en treillis (1) selon l'une quelconque des revendications 1 à 4, **caractérisé en ce que** le matériau polymère constituant ledit canal continu (6) formé par extrusion est un matériau du groupe constitué des thermoplastiques et des résines thermodurcissables.

6. Procédé de fabrication d'un chemin de câbles en treillis selon l'une quelconque des revendications 1 à 5, **caractérisé en ce que** le matériau polymère constituant ledit canal continu (6) formé par extrusion est un matériau isolant électrique ayant une résistivité de surface supérieure à 100 MΩ.
